# EUROPEAN PATENT SPECIFICATION

(11) **EP 1 921 099 B1**
(45) Date of publication and mention of the grant of the patent: **19.09.2012**
(21) Application number: 06782707.1
(22) Date of filing: 11.08.2006
(51) Int. Cl.: C08G 18/48, C08G 18/66, C08G 18/42

(54) **COMPOSITION FOR POLYURETHANE FOAM, POLYURETHANE FOAM OBTAINED FROM THE COMPOSITION, AND USE THEREOF**
ZUSAMMENSETZUNG FÜR POLYURETHANSCHAUMSTOFF, DARAUS ERHALTENER POLYURETHANSCHAUMSTOFF UND VERWENDUNG DAVON
COMPOSITION POUR MOUSSE DE POLYURÉTHANE, MOUSSE DE POLYURÉTHANE OBTENUE À PARTIR DE CELLE-CI ET SON UTILISATION

(30) Priority: 12.08.2005 JP 2005234529; 12.09.2005 US 715586 P
(43) Date of publication of application: 14.05.2008
(73) Proprietor: Mitsui Chemicals, Inc., Tokyo (JP)
(72) Inventor: NOZAWA, Katsuhisa, Sodegaura-shi, Chiba, 2990265 (JP); SASAKI, Masahiro, Sodegaura-shi, Chiba, 2990265 (JP); OKUBO, Kazuhiko, Sodegaura-shi, Chiba, 2990265 (JP)
(74) Representative: Benson, John Everett
(86) International application number: PCT/JP2006/315968
(87) International publication number: WO 2007/020905

(56) References cited:
- WO-A1-2004/096882
- JP-A- 11 050 086
- JP-A- 2005 213 414
- JP-A- 2005 320 437
- JP-A- 2006 002 145
- JP-A- 2006 104 404

## Description

### [TECHNICAL FIELD]

The present invention relates to a polyurethane foam composition containing a plant-derived polyol, a polyurethane foam obtained from the composition and the use thereof. More particularly, the present invention relates to a plant-derived composition capable of providing a polyurethane foam that has excellent low rebound property, is suitable for a shock absorber, a sound absorbing material and a vibration absorbing material, and reduces a feeling of fatigue and a bedsore by making pressure distribution on body more uniform when used as a cushioning material for a chair and a mattress; a polyol suitable for the composition; and a plant-derived polyurethane foam obtained from the composition and the use thereof.

### [BACKGROUND ART]

From the viewpoint of reducing environmental burdens in recent years, plant-derived resins obtained from plant resources have been demanded instead of petroleum-derived resins produced using petroleum resources as raw materials. That is, since plant-derived resins are made from raw materials obtained from plants, which absorb carbon dioxide in the air to grow by photosynthesis, no net increase of atmospheric carbon dioxide results even if carbon dioxide is emitted into the atmosphere on incineration of the used resin, namely such resins correspond to so-called carbon-neutral materials. Therefore, plant-derived resins draw attention as materials contributing to reducing environmental burdens.

Meanwhile, a polyurethane foam having low rebound property, which is one of resin articles, is widely used as a shock absorber, a sound absorbing material, a vibration absorbing material, a cushioning material for a chair, a mattress and the like because of its excellent properties. Such a polyurethane foam having low rebound property is produced by appropriately selecting the composition of the polyurethane foam, that is, the type of polyisocyanate, the number of functional groups and the hydroxyl value of a polyol and the like, so as to exhibit low rebound property at a temperature of use. However, in case of a polyurethane foam formulated to exhibit low rebound property at room temperature, there is a problem that the hardness of the polyurethane foam is significantly increased at low temperatures, for example 0°C or lower, compared to that at room temperature. Various studies have been conducted to solve this problem (for example, see Patent Document 1).

As polyol components used as raw materials of polyurethane foams having low rebound property, there have been known so far a polyether polyol and a polyester polyol derived from petroleum as representative examples, and further it has also been known to use castor oil, which is derived from a plant, and a castor oil-based polyol, which is a castor oil derivative. For example, Patent Document 2 discloses that castor oil is reacted with an aromatic diisocyanate to form a prepolymer and then the prepolymer is reacted with water to form a polyurethane foam. Patent Document 3 discloses a method for producing polyurethane foams by using a castor oil derivative such as hydrogenated castor oil as an additive. Meanwhile, Patent Document 4 discloses the use of an ester group-containing condensate having an average molecular weight of 900 to 4500 produced from ricinoleic acid, which is a main component of a castor oil fatty acid, and a monohydric or polyhydric alcohol, as an internal release agent in producing a flexible polyurethane molded article which may be fine porous. Patent Document 5 discloses the use of a polyester polyol comprising a carboxylic acid unit (A) and a polyhydric alcohol unit (B), wherein the carboxylic acid unit (A) at least partially contains a unit (a) of an oxycarboxylic acid oligomer in which a hydroxy-containing carboxylic acid such as a castor oil fatty acid is condensed to form a dimer or a higher oligomer, as a component of a urethane-based paint composition.

However, the polyurethane foam described in Patent Document 2 is a hard polyurethane foam, and this method cannot provide a polyurethane foam having low rebound property, particularly suitable properties for a cushioning material for a chair, a mattress and the like. Further, in the process described in Patent Document 3, the castor oil-based polyol is used as an additive and the amount added is 0.1 to 15% by weight with respect to a polyhydroxy compound. Particularly, in Examples, the content of the castor oil-based polyol is only 5% of the whole polyol component, and the document describes effects only for curability and a low compression set, while there is no description for the effect that the polyurethane foam in which a resin structure is formed from the castor oil-based polyol exhibits low rebound property. Moreover, in Patent Documents 4 and 5, a castor oil-based polyol having a higher molecular weight is used compared to that used in Patent Documents 2 and 3. However, in Patent Document 4, the castor oil-based polyol is used only as an internal release agent, and, Patent Document 5 discloses only a paint composition. None of the above patent documents describes the effect that a polyurethane foam in which a resin structure is formed from a castor oil-based polyol exhibits low rebound property, particularly suitable properties as a cushioning material for a chair, a mattress and the like.

Any processes described in these patent documents cannot provide a plant-derived polyurethane foam having low rebound property, which has the property demanded in market as described above, particularly a characteristic that the increase in hardness at low temperatures is suppressed. Thus, there has not been known a plant-derived polyurethane foam that is produced by using a plant-derived polyol as a polyol component, has excellent low rebound property, is suitable for a shock absorber, a sound absorbing material and a vibration absorbing material, and reduces a feeling of fatigue and a bedsore by making pressure distribution on body more uniform when used as a cushioning material for a chair and a mattress.
[Patent Document 1] Japanese Patent Laid-open Publication No. H11-286566
[Patent Document 2] US Patent No. 2787601
[Patent Document 3] Japanese Patent Laid-open Publication No. H5-59144
[Patent Document 4] Japanese Patent Laid-open Publication No. S61-91216
[Patent Document 5] Japanese Patent Laid-open Publication No. H11-166155

### [DISCLOSURE OF THE INVENTION]

### [PROBLEMS TO BE SOLVED BY THE INVENTION]

The object of the present invention is to provide a plant-derived composition for obtaining a polyurethane foam that contributes to reducing environmental burdens, has excellent low rebound property, particularly a characteristic that the increase in hardness at low temperatures is suppressed, is suitable for a shock absorber, a sound absorbing material and a vibration absorbing material, and reduces a feeling of fatigue and a bedsore by making pressure distribution on body more uniform when used as a cushioning material for a chair and a mattress; and a plant-derived polyurethane foam having such properties.

### [MEANS TO SOLVE THE PROBLEMS]

As a result of earnest studies to solve the above-described problems, the present inventors have found that there can be obtained a plant-derived polyurethane foam that contributes to reducing environmental burdens, and that has excellent low rebound property, particularly a characteristic that the increase in hardness at low temperatures is suppressed, by producing a polyurethane foam using at least a plant-derived polyol in which the number of side chains, the number of functional groups and the hydroxyl value are within specific ranges respectively, and they have completed the present invention.

The polyurethane foam composition of the present invention comprises a polyol, a catalyst, a surfactant, a foaming agent and a polyisocyanate, wherein
the polyol contains, at least, (A) a polyol that is produced by using a raw material obtained from plant-derived oil, contains more than three side chains per molecule, each side chain comprising a hydrocarbon chain having 4 or more carbon atoms, and has an average number of functional groups of 1.5 to 4.5 and a hydroxyl value of 80 to 140 mgKOH/g,
the polyol (A) is a polyol having at least a structure in which a hydroxycarboxylic acid having 15 or more carbon atoms obtained from plant-derived oil is condensed with a polyhydric alcohol, where in the content of the polyol (A) is 25 to 100% by mass, with respect to 100% by mass of all the polyol components, and
the polyol (A) is a mixture of at least
(B) a polyol that is produced by using a raw material obtained from plant-derived oil and has an average number of functional groups of 1.5 to 4.5 and a hydroxyl value of 20 to 70 mgKOH/g, and
(C) a polyol that is obtained from plant-derived oil and has an average number of functional groups of 1.5 to 4.5 and a hydroxyl value of 140 to 300 mgKOH/g.

The polyurethane foam composition is preferably a composition for a polyurethane foam having low rebound property.

The polyol (A) is preferably one or more kinds of polyol selected from the group consisting of a polyester polyol (A1) having at least a structure in which 3.1 to 17 mol of a hydroxycarboxylic acid having 15 or more carbon atoms obtained from plant-derived oil are condensed with 1 mol of a polyhydric alcohol having 2 to 6 hydroxyl groups per molecule, a polyol (A2) given by further adding propylene oxide and/or ethylene oxide to the polyester polyol (A1), a polyol (A3) given by further adding a lactone to the polyester polyol (A1), and a polyol (A4) given by further adding a hydroxycarboxylic acid having a primary hydroxyl group to the polyester polyol (A1). The plant-derived polyester polyol (A1) is more preferred.

Alternatively, the polyol (A) is preferably one or more kinds of polyols selected from the group consisting of a polyester polyol (A5) having at least a structure in which 3.1 to 17 mol of a hydroxycarboxylic acid are condensed with 1 mol of a polyhydric alcohol having 2 to 6 hydroxyl groups per molecule, wherein the hydroxycarboxylic acid contains a castor oil fatty acid containing, as a main component, ricinoleic acid obtained from castor oil and/or a hydrogenated castor oil fatty acid containing, as a main component, 12-hydroxystearic acid given by saturating the carbon-carbon double bonds in the castor oil fatty acid, a polyol (A6) given by further adding propylene oxide and/or ethylene oxide to the polyester polyol (A5), a polyol (A7) given by further adding a lactone to the polyester polyol (A5), and a polyol (A8) given by further adding a hydroxycarboxylic acid having a primary hydroxyl group to the polyester polyol (A5). The plant-derived polyester polyol (A5) is more preferred.

The polyurethane foam composition preferably contains 25 to 55% by mass of the polyol (B) and 45 to 75% by mass of the polyol (C) with respect to 100% by mass of the total amount of the polyols (B) and (C).

The polyol (B) is preferably a polyol having at least a structure in which a hydroxycarboxylic acid having 15 or more carbon atoms obtained from plant-derived oil is condensed with a polyhydric alcohol.
The polyol (B) is preferably one or more kinds of polyols selected from the group consisting of a polyester polyol (B1) having at least a structure in which 3 to 30 mol of a hydroxycarboxylic acid having 15 or more carbon atoms obtained from plant-derived oil are condensed with 1 mol of a polyhydric alcohol having 2 to 6 hydroxyl groups per molecule, a polyol (B2) given by further adding propylene oxide and/or ethylene oxide to the polyester polyol (B1), a polyol (B3) given by further adding a lactone to the polyester polyol (B1), and a polyol (B4) given by further adding a hydroxycarboxylic acid having a primary hydroxyl group to the polyester polyol (B1). The plant-derived polyester polyol (B1) is more preferred.

Alternatively, the polyol (B) is preferably one or more kinds of polyols selected from the group consisting of a polyester polyol (B5) having at least a structure in which 3 to 30 mol of a hydroxycarboxylic acid are condensed with 1 mol of a polyhydric alcohol having 2 to 6 hydroxyl groups per molecule, wherein the hydroxycarboxylic acid contains a castor oil fatty acid containing, as a main component, ricinoleic acid obtained from castor oil and/or a hydrogenated castor oil fatty acid containing, as a main component, 12-hydroxystearic acid given by saturating the carbon-carbon double bonds in the castor oil fatty acid, a polyol (B6) given by further adding propylene oxide and/or ethylene oxide to the polyester polyol (B5), a polyol (B7) given by further adding a lactone to the polyester polyol (B5), and a polyol (B8) given by further adding a hydroxycarboxylic acid having a primary hydroxyl group to the polyester polyol (B5). The plant-derived polyester polyol (B5) is more preferred.

The polyol (C) is preferably castor oil and/or its derivative, or a soybean oil derivative.
The polyol of the present invention comprises at least (A) a polyol that contains at least a structure in which a hydroxycarboxylic acid having 15 or more carbon atoms obtained from plant-derived oil is condensed with a polyhydric alcohol, contains more than three side chains per molecule, each side chain comprising a hydrocarbon chain having 4 or more carbon atoms, and has an average number of functional groups of 1.5 to 4.5 and a hydroxyl value of 80 to 140 mgKOH/g, wherein the polyol (A) is a mixture of at least (B) a polyol that contains at least a structure in which a hydroxycarboxylic acid having 15 or more carbon atoms obtained from plant-derived oil is condensed with a polyhydric alcohol, and has an average number of functional groups of 1.5 to 4.5 and a hydroxyl value of 20 to 70 mgKOH/g, and (C) a polyol that is obtained from plant-derived oil and has an average number of functional groups of 1.5 to 4.5 and a hydroxyl value of 140 to 300 mgKOH/g, and wherein the content of polyol (A) is 25 to 100% by mass, with respect to 100% by mass of all the polyol components.

The polyurethane foam of the present invention is produced by foaming the above polyurethane foam composition. Moreover, the process for producing polyurethane foams of the present invention comprises foaming the above polyurethane foam composition.

The polyurethane foam having low rebound property of the present invention is produced by foaming the above polyurethane foam composition. Moreover, the process for producing polyurethane foams having low rebound property of the present invention comprises foaming the above polyurethane foam composition.

Further, the polyurethane foam having low rebound property of the present invention has a value, obtained by dividing the foam hardness at -20°C by the foam hardness at 23°C, of 8 or less. Moreover, in the process for producing this polyurethane foam having low rebound property, there is used a polyol that has, on average, not less than 3.1 side chains per molecule, each side chain comprising a hydrocarbon chain having 4 or more carbon atoms, and has an average number of functional groups of 1.5 to 4.5 and a hydroxyl value of 80 to 140 mgKOH/g.

The polyol of the present invention enables to produce a polyurethane foam having low rebound property, which has a value, obtained by dividing the foam hardness at -20°C by the foam hardness at 23°C, of 8 or less. The polyol has, on average, 3.1 or more side chains per molecule, each side chain comprising a hydrocarbon chain having 4 or more carbon atoms, and has an average number of functional groups of 1.5 to 4. 5 and a hydroxyl value of 80 to 140 mgKOH/g.

### [EFFECTS OF THE INVENTION]

The present invention can provide a plant-derived composition capable of providing a polyurethane foam that has excellent low rebound property, particularly a characteristic that the increase in hardness at low temperatures is suppressed, is suitable for a shock absorber, a sound absorbing material and a vibration absorbing material, and reduces a feeling of fatigue and a bedsore by making pressure distribution on body more uniform when used as a cushioning material for a chair and a mattress; and a plant-derived polyurethane foam having such properties.

Furthermore, the composition and the polyurethane foam of the present invention, because it is derived from plants, can contribute to reducing environmental burdens, which is oriented to the recent social trend toward global environmental conservation.

### [BRIEF DESCRIPTION OF DRAWINGS]

Fig. 1 shows the results of the viscoelasticity measurement for the flexible polyurethane foam obtained in Example 1.
Fig. 2 shows the results of the viscoelasticity measurement for the flexible polyurethane foam obtained in Comparative Example 1.
Fig. 3 shows the results of the 25% CLD measurement at each temperature (-20°C, 0°C and 23°C) in Example 1 and Comparative Example 1.[Best Modes for Carrying Out the Invention]

### [Polyurethane foam composition]

The polyurethane foam composition of the present invention comprises a polyol, a catalyst, a surfactant, a foaming agent and a polyisocyanate and, as necessary, other auxiliaries. The polyol contains at least a plant-derived polyol having a number of side chains, a number of functional groups and a hydroxyl value within specific ranges respectively, and optionally contains another polyol.

### <Plant-derived polyol>

The plant-derived polyol used in the present invention is a polyol (A) that is produced by using a raw material obtained from plant-derived oil, has 3 or more side chains per molecule, each side chain comprising a hydrocarbon chain having 4 or more carbon atoms, and has an average number of functional groups of 1.5 to 4.5 and a hydroxyl value of 80 to 140 mgKOH/g. The average number of functional groups is preferably 2.0 to 4.0 and the hydroxyl value is preferably 100 to 135 mgKOH/g.

Such a polyol (A) can be prepared by condensing a hydroxycarboxylic acid having 15 or more carbon atoms obtained from plant-derived oil with a polyhydric alcohol so that the number of side chains, the average number of functional groups and the hydroxyl value are within the above range. As a preferred polyol (A), there may be mentioned plant-derived polyester polyols (A1) to (A8) below.

### (Plant-derived polyester polyol (A1))

A polyester polyol having at least a structure in which preferably 3.1 to 17 mol, more preferably 3.5 to 15 mol, of a hydroxycarboxylic acid having 15 or more carbon atoms obtained from plant-derived oil such as castor oil or soybean oil are condensed with 1 mol of a polyhydric alcohol having 2 to 6 hydroxyl groups per molecule.

### (Plant-derived polyester polyol (A2))

A polyol given by further adding propylene oxide and/or ethylene oxide to the plant-derived polyester polyol (A1).

### (Plant-derived polyester polyol (A3))

A polyol given by further adding a lactone to the plant-derived polyester polyol (A1).

### (Plant-derived polyester polyol (A4))

A polyol given by further adding a hydroxycarboxylic acid having a primary hydroxyl group to the plant-derived polyester polyol (A1).

### (Plant-derived polyester polyol (A5))

A polyester polyol having at least a structure in which preferably 3.1 to 17 mol, more preferably 3.5 to 15 mol, of a hydroxycarboxylic acid are condensed with 1 mol of a polyhydric alcohol having 2 to 6 hydroxyl groups per molecule, wherein the hydroxycarboxylic acid contains a castor oil fatty acid containing, as a main component, ricinoleic acid obtained from castor oil and/or a hydrogenated castor oil fatty acid containing, as a main component, 12-hydroxystearic acid given by saturating the carbon-carbon double bonds in the castor oil fatty acid.

### (Plant-derived polyester polyol (A6))

A polyol given by further adding propylene oxide and/or ethylene oxide to the plant-derived polyester polyol (A5).

### (Plant-derived polyester polyol (A7))

A polyol given by further adding a lactone to the plant-derived polyester polyol (A5).

### (Plant-derived polyester polyol (A8))

A polyol given by further adding a hydroxycarboxylic acid having a primary hydroxyl group to the plant-derived polyester polyol (A5).

These plant-derived polyester polyols may be used alone or in combination of two or more. Further, among these plant-derived polyester polyols, the plant-derived polyester polyols (A1) and (A5) are more preferred and the plant-derived polyester polyol (A5) is particularly preferred.

There can be obtained a plant-derived polyester polyol having the number of side chains, the average number of functional groups and the hydroxyl value within the above range, by condensing a hydroxycarboxylic acid having 15 or more carbon atoms with a polyhydric alcohol at the above ratio. A polyurethane foam having good low rebound property can be formed by using such a plant-derived polyester polyol. The "polyol having a structure in which, for example, 3.1 to 17 mol of a hydroxycarboxylic acid are condensed with 1 mol of a polyhydric alcohol" also includes a polyol obtained by condensing the hydroxycarboxylic acid with the polyhydric alcohol in a ratio of 3.1 to 17 mol of the former per molecule of the latter (in the case of a mixture of kinds of two or more polyhydric alcohols, the total amount thereof).

There may be also used a polyol in which a hydroxycarboxylic acid having 15 or more carbon atoms is condensed with a fat/oil having a hydroxyl group such as castor oil so as to have a structure in which 3.1 to 17 mol of the hydroxycarboxylic acid are condensed with 1 mol of a polyhydric alcohol.

As the polyhydric alcohol, there may be mentioned a diol having 2 to 10 carbon atoms such as ethylene glycol, propylene glycol, diethylene glycol, dipropylene glycol, 1,3-propanediol, 1,3-butanediol, 1,4-butanediol, 1, 6-hexanediol and 1, 4-cyclohexanediol; a triol having 2 to 10 carbon atoms such as trimethylolpropane and glycerin; a tetraol such as diglycerin and pentaerythritol; a hexaol such as dipentaerythritol; sugars such as glucose, sorbitol, dextrose, fructose and sucrose, and derivatives thereof; and phenols having two or more hydroxyl groups such as bisphenol A. Moreover, there may be also used an alkylene oxide adduct of a polyhydric alcohol in which ethylene oxide, propylene oxide or the like is added to the polyhydric alcohol. These polyhydric alcohols may be used alone or as a mixture of two or more.

As the hydroxycarboxylic acid having 15 or more carbon atoms, there may be preferably used a saturated or unsaturated hydroxy-containing fatty acid obtained from plants or a hydrogenated derivative of such an unsaturated fatty acid. In particular, a fatty acid having 15 to 20 carbon atoms is preferred. Among these, more preferred are a saturated or unsaturated hydroxy-containing fatty acid isolated from a natural fat/oil such as castor oil, Dimorphotheca oil, Lesquerella oil and Lesquerella densipila seed oil; and a hydrogenated derivative of such an unsaturated fatty acid. Particularly preferred is a fatty acid containing ricinoleic acid or 12-hydroxystearic acid as a main component. There may be also used a fatty acid obtained by hydroxylating an unsaturated fatty acid having no hydroxyl group such as oleic acid and linoleic acid, which are isolated from soybean oil, olive oil, rice bran oil, palm oil and the like; and a hydroxylated plant-derived oil fatty acid such as a hydroxylated soybean oil fatty acid isolated after hydroxylating soybean oil.

When the hydroxycarboxylic acid is condensed with the polyhydric alcohol, the condensation may be carried out according to either a method in which the hydroxycarboxylic acid is condensed and the obtained polycondensate is condensed with the polyhydric alcohol, or a method in which the polyhydric alcohol and the hydroxycarboxylic acids are condensed and then the hydroxycarboxylic acids is further condensed. Of these methods, the former is preferably used.

As the lactone, there may be mentioned a β-lactone such as β-propiolactone, a γ-lactone such as γ-butyrolactone, a δ-lactone such as δ-valerolactone, an ε-lactone such as ε-caprolactone, β-Propiolactone and ε-caprolactone are preferred.

As the hydroxycarboxylic acid having a primary hydroxyl group, there may be mentioned a ring-opened product of the above lactone, such as 3-hydroxypropionic acid.
In the present invention, the acid value of the polyol (A) is preferably 0.1 to 10 mgKOH/g, more preferably 0.3 to 8 mgKOH/g, and particularly preferably 0.5 to 5 mgKOH/g.

Further, the polyol (A) may be prepared using a plant-derived polyol having a low hydroxyl value and a plant-derived polyol having a high hydroxyl value in combination as a mixture thereof.

### (B) Plant-derived polyol having a low hydroxyl value

As the plant-derived polyol having a low hydroxyl value (hereinafter, also referred to as "polyol (B)") used in the present invention, preferred is a plant-derived polyol that is produced by using a raw material obtained from plant-derived oil and has an average number of functional groups of 1.5 to 4.5 and a hydroxyl value of 20 to 70 mgKOH/g. The average number of functional groups is more preferably 2.0 to 4.0 and the hydroxyl value is more preferably 40 to 65 mgKOH/g.

The polyol (B) preferably has side chain (s) each of which comprises a hydrocarbon having 4 or more carbon atoms. The number of the side chains is not particularly limited as long as the side chain of the polyol (A) is within the above-mentioned range, but it is preferably 3 or more, more preferably 3.1 or more, per molecule.

Such a polyol (B) can be prepared by condensing a hydroxycarboxylic acid having 15 or more carbon atoms obtained from plant-derived oil with a polyhydric alcohol so that the average functionality and the hydroxyl value are within the above range. As a preferred polyol (B), there may be mentioned plant-derived polyester polyols (B1) to (B8) below.

### (Plant-derived polyester polyol (B1))

A polyester polyol having at least a structure in which preferably 3 to 30 mol, more preferably 6 to 28 mol, of a hydroxycarboxylic acid having 15 or more carbon atoms obtained from plant-derived oil such as castor oil or soy bean oil are condensed with 1 mol of a polyhydric alcohol having 2 to 6 hydroxyl groups per molecule.

### (Plant-derived polyester polyol (B2))

A polyol given by further adding propylene oxide and/or ethylene oxide to the plant-derived polyester polyol (B1).

### (Plant-derived polyester polyol (B3))

A polyol given by further adding a lactone to the plant-derived polyester polyol (B1).

### (Plant-derived polyester polyol (B4))

A polyol given by further adding a hydroxycarboxylic acid having a primary hydroxyl group to the plant-derived polyester polyol (B1).

### (Plant-derived polyester polyol (B5))

A polyester polyol having at least a structure in which preferably 3 to 30 mol, more preferably 6 to 28 mol, of a hydroxycarboxylic acid are condensed with 1 mol of a polyhydric alcohol having 2 to 6 hydroxyl groups per molecule, wherein the hydroxycarboxylic acid contains a castor oil fatty acid containing, as a main component, ricinoleic acid obtained from castor oil and/or a hydrogenated castor oil fatty acid containing, as a main component, 12-hydroxystearic acid given by saturating the carbon-carbon double bonds in the castor oil fatty acid.

### (Plant-derived polyester polyol (B6))

A polyol given by further adding propylene oxide and/or ethylene oxide to the plant-derived polyester polyol (B5).

### (Plant-derived polyester polyol (B7))

A polyol given by further adding a lactone to the plant-derived polyester polyol (B5).

### (Plant-derived polyester polyol (B8))

A polyol given by further adding a hydroxycarboxylic acid having a primary hydroxyl group to the plant-derived polyester polyol (B5).

These plant-derived polyester polyols may be used alone or in combination of two or more. Further, among these plant-derived polyester polyols, the plant-derived polyester polyols (B1) and (B5) are more preferred and the plant-derived polyester polyol (B5) is particularly preferred.

A polyurethane foam having good low rebound property can be formed by using a plant-derived polyester polyol having the above range of condensation ratio of a hydroxycarboxylic acid having 15 or more carbon atoms to a polyhydric alcohol. The "polyol having a structure in which, for example, 3 to 30 mol of the hydroxycarboxylic acid are condensed with 1 mol of a polyhydric alcohol" includes also a polyol obtained by condensing 3 to 30 mol of the hydroxycarboxylic acid with 1 mol of the polyhydric alcohol (for a mixture of two or more polyhydric alcohols, as the total).

There may also be used a polyol in which a hydroxycarboxylic acid having 15 or more carbon atoms is condensed with a fat/oil having a hydroxyl group such as castor oil so as to have a structure in which 3 to 30 mol of the hydroxycarboxylic acid are condensed with 1 mol of a polyhydric alcohol.

As the polyhydric alcohol, there may be used the polyhydric alcohols described as examples for the plant-derived polyol (A). These polyhydric alcohols may be used alone or in combination of two or more.

As the hydroxycarboxylic acid having 15 or more carbon atoms, there may be preferably used a saturated or unsaturated hydroxy-containing fatty acid obtained from plants or a hydrogenated derivative of such an unsaturated fatty acid. In particular, a fatty acid having 15 to 20 carbon atoms is preferred. Among these, more preferred are a saturated or unsaturated hydroxy-containing fatty acid isolated from a natural fat/oil such as castor oil, Dimorphotheca oil, Lesquerella oil and Lesquerella densipila seed oil; and a hydrogenated derivative of such an unsaturated fatty acid. Particularly preferred is a fatty acid containing ricinoleic acid or 12-hydroxystearic acid as a main component. There may be also used a fatty acid obtained by hydroxylating an unsaturated fatty acid having no hydroxyl group such as oleic acid and linoleic acid, which are isolated from soybean oil, olive oil, rice bran oil, palm oil and the like; and a hydroxylated plant-derived oil fatty acid such as a hydroxylated soybean oil fatty acid isolated after hydroxylating soybean oil.

When the hydroxycarboxylic acid is condensed with the polyhydric alcohol, the condensation may be carried out according to either a method in which the hydroxycarboxylic acid is condensed and the obtained polycondensate is condensed with the polyhydric alcohol, or a method in which the polyhydric alcohol and the hydroxycarboxylic acids are condensed and then the hydroxycarboxylic acids is further condensed. Of these methods, the former is preferably used.

As the lactone, there may be used the lactones described as examples for the plant-derived polyol (A), and β-propiolactone and ε-caprolactone are preferable.
As the hydroxycarboxylic acid having a primary hydroxyl group, there may be used the hydroxycarboxylic acid having a primary hydroxyl group described as examples for the plant-derived polyol (A).

In the present invention, the acid value of the polyol (B) is preferably 0.1 to 10 mgKOH/g, more preferably 0.3 to 8 mgKOH/g, and particularly preferably 0.5 to 5 mgKOH/g.

### (C) Plant-derived polyol having a high hydroxyl value

As the plant-derived polyol having a high hydroxyl value (hereinafter, also referred to as "polyol (C)") used in the present invention, preferred is a plant-derived polyol that is produced from plant-derived oil, and has an average number of functional groups of 1.5 to 4.5 and a hydroxyl value of 140 to 300 mgKOH/g. The average number of functional groups is more preferably 2.0 to 4.0 and the hydroxyl value is more preferably 150 to 200 mgKOH/g.

The polyol (C) preferably has a side chain (s) each of which comprises a hydrocarbon having 4 or more carbon atoms. The number of the side chains per molecule is not particularly limited as long as the side chain of the polyol (A) is within above range, but it is preferably 3 or more, more preferably 3.1 or more, per molecule.

The polyol (C) is exemplified by castor oil and its derivative. Further, the polyol (C) also includes a soybean oil derivative.
As specific examples of castor oil and its derivative, there may be mentioned castor oil, hydrogenated castor oil, a polyester polyol comprising a condensate of castor oil fatty acid with a polyhydric alcohol, and a polyester polyol comprising a condensate of hydrogenated castor oil fatty acid with a polyhydric alcohol.

As specific examples of the soybean oil derivative, there may be mentioned hydroxylated soybean oil, a polyester polyol comprising a condensate of hydroxylated soybean oil fatty acid with a polyhydric alcohol, and the like.
Further, the polyol (C) also includes glucose, which is obtained mainly from starch, lactic acid, which is a derivative of glucose, 3-hydroxypropionic acid, succinic acid, 1,4-butanediol, a mixture or a derivative thereof and the like. Moreover, the polyol (C) also includes cellulose, hemicellulose and lignin, which are obtained from wood, and a derivative thereof; sebacic acid, which is a derivative of castor oil fatty acid, and a derivative thereof; and the like.

These polyols (C) may be used alone or in combination of two or more.
There can be prepared the polyester polyol comprising a condensate of a fatty acid derived from plant-derived oil such as castor oil or hydroxylated soybean oil with a polyhydric polyol in the same manner as the condensation method described for the polyol (A) or (B) except that the condensation is performed with the condensation degree changed so that the hydroxyl value is within the above range.

In the case where the polyol (A) is prepared by the combination of the polyol (B) and the polyol (C), the ratio of the polyol (B) to the polyol (C) may be set as appropriate so that the number of side chains, the average number of functional groups and the hydroxyl value of the resultant polyol (A) are within the above ranges respectively. Preferably the content of the polyol (B) is 25 to 55% by mass and the content of the polyol (C) is 45 to 75% by mass, with respect to 100% by mass of the total amount of the polyols (B) and (C).

### <Other polyols>

In the polyurethane foam composition of the present invention, there may be optionally added other polyols commonly used for production of polyurethane foams in combination with the specific polyol and/or the specific polymer polyol described above. As the other polyols, there may be mentioned, for example, a polyether polyol except the polyols (A), (B) and (C), a polymer polyol, a polyester polyol and the like.

### (Polyether polyol (D))

As the polyether polyol except the polyols (A), (B) and (C) (hereinafter also referred to as "polyether polyol (D)"), there may be mentioned, for example, an oligomer or a polymer that is obtained by ring-opening polymerization of an alkylene oxide with an active hydrogen-containing compound derived from petroleum. Such a polyether polyol (D) is generally obtained by performing ring-opening polymerization of an alkylene oxide with an active hydrogen-containing compound as an initiator in the presence of a catalyst.

### (Active hydrogen-containing compound)

The active hydrogen-containing compound includes an active hydrogen-containing compound having an active hydrogen atom(s) on an oxygen atom and an active hydrogen-containing compound having an active hydrogen atom(s) on a nitrogen atom, and an active hydrogen-containing compound having 2 to 8 of functional groups is preferred.

As the active hydrogen-containing compound having an active hydrogen atom(s) on an oxygen atom, there may be mentioned water, carboxylic acids having 1 to 20 carbon atoms, polycarboxylic acids having 2 to 20 carbon atoms and 2 to 6 carboxyl groups in one molecule, carbamic acids, alcohols having 1 to 20 carbon atoms, polyhydric alcohols having 2 to 20 carbon atoms and 2 to 8 hydroxyl groups in one molecule, sugars and derivatives thereof, aromatic compounds having 6 to 20 carbon atoms and 1 or 3 hydroxyl groups in one molecule, polyalkylene oxides having 2 to 8 terminals, at least one of the terminals having a hydroxyl group, in one molecule, and the like.

As the active hydrogen-containing compound having an active hydrogen atom(s) on a nitrogen atom, there may be mentioned aliphatic or aromatic primary amines having 1 to 20 carbon atoms, aliphatic or aromatic secondary amines having 2 to 20 carbon atoms, polyamines having 2 to 20 carbon atoms and 2 to 3 primary or secondary amino groups in one molecule, saturated cyclic secondary amines having 4 to 20 carbon atoms, unsaturated cyclic secondary amines having 4 to 20 carbon atoms, cyclic polyamines having 4 to 20 carbon atoms and 2 to 3 secondary amino groups in one molecule, unsubstituted or N-monosubstituted acid amides having 2 to 20 carbon atoms, 5-to 7-membered cyclic amides, imides of dicarboxylic acids having 4 to 10 carbon atoms, and the like.

These active hydrogen-containing compounds may be used alone or as a mixture of two or more. Among these active hydrogen-containing compounds, preferred are polyhydric alcohols having 2 to 20 carbon atoms and 2 to 8 hydroxyl groups in one molecule, and more preferred are ethylene glycol, propylene glycol, diethylene glycol, dipropylene glycol, glycerin, diglycerin and pentaerythritol.

### (Alkylene oxide)

As the alkylene oxide, an alkylene oxide having 2 to 12 carbon atoms is preferred. Specifically, there may be mentioned ethylene oxide, propylene oxide, 1, 2-butylene oxide, 2,3-butylene oxide, styrene oxide, cyclohexene oxide, epichlorohydrin, epibromohydrin, methyl glycidyl ether, allyl glycidyl ether, phenyl glycidyl ether and the like. More preferred are ethylene oxide, propylene oxide, 1,2-butylene oxide and styrene oxide, and particularly preferred are ethylene oxide and propylene oxide.

These alkylene oxides may be used alone or in combination of two or more. In the case where these alkylene oxides are used in combination, there may be adopted a method of performing simultaneous addition-polymerization, a method of performing sequential addition-polymerization, a method of repeating the sequential addition polymerization, and the like of a plurality of alkylene oxides.

The polyether polyol (D) can be produced by using the catalysts, under reaction conditions, through production methods, and the like, which are described in "Revised Chemistry of Polymer Synthesis" 2nd Ed., 1st printing, Kagaku-dojin Publishing Company, Inc.(1989), pp. 172-180, written by Takayuki Ohtsu, "Polyurethane" 8th printing, Maki-Shoten Publishing Co. (1964), pp. 41-45, edited by Nobutaka Matsudaira and Tetsuro Maeda, and the like.

### (Polymer polyol)

As the polymer polyol used as the other polyol, there may be mentioned a polymer polyol obtained from a polyether polyol.

The polymer polyol can be obtained by performing dispersion-polymerization of a compound having an unsaturated bond in a polyether polyol using a radical initiator such as azobisisobutyronitrile, in the form of a dispersion in which vinyl polymer particles are dispersed in the polyether polyol. The vinyl polymer particle, although it may be made of a polymer of the compound having an unsaturated bond, is preferably a polymer particle in which at least part of the compound having an unsaturated bond is grafted to the polyether polyol used as a dispersion medium during the dispersion polymerization.

As the compound having an unsaturated bond, there may be mentioned, for example, acrylonitrile, styrene and acrylamide, which are a compound having an unsaturated bond in the molecule. These compounds having an unsaturated bond may be used alone or as a mixture of two or more. In producing the polymer polyol, a dispersion stabilizing agent, a chain transfer agent and the like may be used together with the compound having an unsaturated bond.

### (Polyester polyol)

As the polyester polyol, there may be mentioned, for example, a condensate of a low molecular weight polyol with a carboxylic acid and a lactone-based polyol such as a ring-opening polymerization product of ε-caprolactone and a ring-opening polymerization product of β-methyl-δ-valerolactone.

As the low molecular weight polyol, there may be mentioned a diol having 2 to 10 carbon atoms such as ethylene glycol and propylene glycol; a triol having 2 to 10 carbon atoms such as glycerin, trimethylolpropane and trimethylolethane; a tetraol such as pentaerythritol and diglycerin; and a sugar such as sorbitol and sucrose; and the like.

As the carboxylic acid, there may be mentioned a dicarboxylic acid having 2 to 10 carbon atoms such as succinic acid, adipic acid, maleic acid, fumaric acid, phthalic acid and isophthalic acid; an acid anhydride having 2 to 10 carbon atoms such as succinic anhydride, maleic anhydride, and phthalic anhydride; and the like.

### <Polyol component>

The polyol component used in the present invention comprises at least the polyol (A) and optionally contains the other polyol (s). The content of the polyol (A) is 25 to 100% by mass, more preferably 50 to 100% by mass, further more preferably 80 to 100% by mass, with respect to 100% by mass of all the polyol components. When the content of the polyol (A) is within the above range, the obtained polyurethane foam has excellent low rebound property, particularly a characteristic that the increase in hardness at low temperatures is suppressed.

When the polyol component contains the other polyols, its content is preferably less than 75% by mass, more preferably less than 50% by mass, and particularly preferably less than 30% by mass, with respect to 100% by mass of all the polyol components.

### <Catalyst>

The catalyst used in the present invention is used for the reaction of a polyol with a polyisocyanate, and a conventional publicly-known catalyst may be used without any particular limitation. There may be mentioned, for example, amine catalysts including tertiary amines such as triethylamine, triethylenediamine, bis(2-dimethylaminoethyl) ether and N-methylmorpholine; a quaternary ammonium salt such as tetraethylammonium hydroxide; imidazoles such as imidazole and 2-ethyl-4-methylimidazole; and the like; and organometallic catalysts including organotin compounds such as tin acetate, tin octanoate, dibutyltin dilaurate and dibutyltin chloride; organolead compounds such as lead octanoate and lead naphthenate; organonickel compounds such as nickel naphthenate; and the like. These catalysts may be used alone or in combination of two or more. Among these catalysts, it is preferred to use an amine catalyst and an organometallic catalyst in combination, and it is particularly preferred to use a tertiary amine and an organotin compound in combination. The amount of the catalyst used is preferably 0.01 to 5 parts by mass, more preferably 0.2 to 3 parts by mass, with respect to 100 parts by mass of the total amount of the polyol components.

### <Surfactant>

As the surfactant used in the present invention, there may be used a conventional publicly-known surfactant without any particular limitation. In general, an organosilicon-based surfactant is preferably used. For example, there may be preferably used SRX-294A produced by Dow Corning Toray Silicon Co., Ltd., F-242T produced by Shin-Etsu Chemical Co., Ltd. and the like. The amount of the surfactant to be used is preferably 0.1 to 4 parts by mass, more preferably 0.4 to 3 parts by mass, with respect to 100 parts by mass of the total amount of the polyol components.

### <Foaming agent>

As the foaming agent used in the present invention, there may be used a publicly-known foaming agent commonly used for production of polyurethane foams. Such a foaming agent is exemplified by water and a physical foaming agent, which may be used alone or in combination of two or more.

As the physical foaming agent, there may be mentioned hydrofluorocarbons (HFC-245fa, etc.), which were developed for the purpose of global environmental conservation, hydrocarbons (cyclopentane, etc.), carbon dioxide gas, liquefied carbon dioxide and other foaming agents. These physical foaming agents may be used together with water. In the present invention, it is preferred to use water alone as the foaming agent. The amount of the foaming agent to be used is preferably 0.5 to 5 parts by mass, more preferably 0.8 to 4 parts by mass, with respect to 100 parts of the total amount of the polyol components.

### <Polyisocyanate>

The polyisocyanate used in the present invention is not particularly limited and exemplified by a conventional publicly-known polyisocyanate described in "Polyurethane Resin Handbook" 1st printing, edited by Keiji Iwata, Nikkan Kogyo Shimbun, Ltd. (1987), pp. 71-98 and the like. For example, there may be mentioned an aromatic polyisocyanate such as 2,4-or 2,6-tolylene diisocyanate (TDI), diphenylmethane diisocyanate (MDI), phenylene diisocyanate (PDI) and naphthalene diisocyanate (NDI); an aralkyl polyisocyanate such as 1,3- or 1,4-xylylene diisocyanate (XDI); an aliphatic polyisocyanate such as hexamethylene diisocyanate (HDI); an alicyclic polyisocyanate such as 3-isocyanatomethyl-3,5,5-trimethylcyclohexyl isocyanate (IPDI), 4, 4'-methylenebis(cyclohexyl isocyanate) (H₁₂MDI) and 1,3- or 1,4-bis(isocyanatomethyl)cyclohexane (H₆XDI), and a carbodiimide-modified, biuret-modified form or allophanate-modified product of these alicyclic polyisocyanates, a dimer or a trimer of these alicyclic polyisocyanates, a polymethylene polyphenyl polyisocyanate (polymeric MDI), and the like. These polyisocyanates may be used alone or in combination of two ore more. Among these, aromatic polyisocyanates are preferred and TDI is more preferred.

In the present invention, it is desirable to use each component so that the NCO index is preferably 0.70 to 1.20, more preferably 0.75 to 1.15. In the present invention, the NCO index means a value obtained by dividing the total number of isocyanate groups in a polyisocyanate by the total number of active hydrogens, which react with isocyanate groups, in a hydroxyl group of a polyol, an amino group of a cross-linking agent and the like, water and the like. That is, if the number of isocyanate groups in a polyisocyanate is stoichiometrically equal to the number of active hydrogens reacting with the isocyanate groups, the NCO index is 1.0.

### <Other auxiliaries>

For the polyurethane foam composition of the present invention, in addition to the above components, there may be used a chain extender, a cross-linking agent, a cell opener and, as other auxiliaries, additives commonly used in production of polyurethane foams such as a flame retardant, a pigment, a plasticizer, an ultraviolet absorber, and an antioxidant, within a range where the objective of the present invention is not impaired.

As the flame retardant, there may be used a publicly-known flame retardant typically used in production of polyurethane foams, which is exemplified by a condensed phosphoric acid ester (for example, CR-504, produced by Daihachi Chemical Industry Co., Ltd.), tris(chloroisopropyl) phosphate (for example, Fyrol PCF, produced by Akzo Nobel K.K.) and the like. The amount of the flame retardant to be used is preferably 20 parts by mass or less, more preferably 15 parts by mass or less, with respect to 100 parts by mass of the total amount of the polyol components.

### [Polyurethane foam]

As the production method of polyurethane foams in the present invention, there may be adopted a conventional publicly-known method as appropriate without any particular limitation. Specifically, the polyurethane foam may be produced by a publicly-known foaming process such as a slab foaming process, a mold foaming process or a spraying process.

For example, the polyurethane foam may be obtained as follows: a resin premix is prepared by premixing the plant-derived polyol, the catalyst, the surfactant, the foaming agent, and optionally the other polyols and the other auxiliaries, and subsequently the resin premix and the polyisocyanate are mixed so as to attain a given NCO index typically using a high-pressure foaming machine or a low-pressure foaming machine, followed by reaction, foaming and curing.

In this way, there can be obtained a polyurethane foam that contributes to reducing environmental burdens, has excellent low rebound property, particularly a characteristic that the increase in hardness at low temperatures is suppressed, is suitable for a shock absorber, a sound absorbing material and a vibration absorbing material, and reduces a feeling of fatigue and a bedsore by making pressure distribution on body more uniform when used as a cushioning material for a chair and a mattress.

More specifically, the polyurethane foam having low rebound property of the present invention has a value, obtained by dividing the foam hardness at -20°C by the foam hardness at 23°C, of 8 or less, preferably 5 or less. For the polyurethane foam having low rebound property which has a value, obtained by dividing the foam hardness at -20°C by the foam hardness at 23°C, within the above range, the foam hardness is only by a small degree increased at -20°C compared to the foam hardness at 23°C. Such a polyurethane foam exhibits excellent low rebound property even at a temperature as low as -20°C, and hence can excellently function also in applications where the foam having low rebound property is used outside in cold climates (for example, a sleeping bag for mount-climbing, a chair for the audience in an outdoor arena, medical/sport protective pad, and the like). On the contrary, a conventional polyurethane foam, which was formulated so as to exhibit low rebound property around room temperature, had a drawback that the hardness of the polyurethane foam significantly increased at low temperatures, for example 0°C or lower, compared to that at room temperature, causing a problem of being inferior in low rebound property under the conditions of low temperatures as mentioned above.

The polyurethane foam that exhibits excellent low rebound property even under low temperature conditions as described above can be produced by using the polyol (A).

### [EXAMPLES]

Hereinafter, the present invention will be explained in more detail with reference to Examples, but the present invention is not limited to these Examples. The terms "parts" and "%" in Examples represent "parts by mass" and "% by mass", respectively. The analyses and measurements in Examples and Comparative Examples were performed in accordance with the following methods.

### (1) Core density (in Tables in Examples, core density is abbreviated as "Dco")

The measurement was performed in accordance with the measurement method of the apparent density described in JIS K-6400. In the present invention, the core density was measured for a cuboid foam sample prepared by removing the skin from a foam sample.

### (2) Foam hardness (in Tables in Examples, abbreviated as "25%CLD")

The measurement was performed in accordance with the method A described in JIS K-6400 for a foam having a thickness of 50 mm. In the hardness measurement, no preliminary compression was performed and a value at 20 sec after 25% compression was recorded as the measured value.

### (3) Ball rebound (in Tables in Examples, abbreviated as "BR")

The measurement was performed by the method described in JIS K-6400.

### (4) Air flowability (in Tables in Examples, abbreviated as "Air Flow")

The measurement was performed by the method described in JIS K-6400.

### (5) Acid value

The measurement was performed by the method described in JIS K-1557.

### (6) Hydroxyl value

The measurement was performed by the method described in JIS K-1557.

### (7) Dynamic viscoelasticity test

By using a cubic specimen having a length of 2 cm and a section area of 2 cm x 2 cm, the measurement was performed with a Solid Analyzer RSA III manufactured by Rheometric Scientific Inc. with a heating rate of 5 °C/min at a frequency of 1 Hz with an amplitude of ±0.02 mm. From the data obtained, the values of tan δ and the storage elasticity (E') were determined.

### <Synthesis of a plant-derived polyol>

### (Synthesis Example 1)

A reactor equipped with a stirrer, a thermometer, a nitrogen inlet tube and a reflux condenser was charged with 1192 g (4 mol) of a castor oil fatty acid having an acid value of 188 mgKOH/g and 1200 g (4 mol) of a hydrogenated castor oil fatty acid having an acid value of 187 mgKOH/g as hydroxycarboxylic acids having 15 or more carbon atoms and OH group. The condensation reaction was performed under a nitrogen atmosphere at a temperature range of 180 to 230°C for 2 hr, during which the water generated was distilled off from the system, to obtain an oxycarboxylic acid oligomer having an acid value of 70 mgKOH/g. This oxycarboxylic acid oligomer corresponded to a 2.7-mer of an equimolar mixture of the castor oil fatty acid and the hydrogenated castor oil fatty acid.

Subsequently, to the above reactor were added 92 g (1 mol) of glycerin as a polyhydric alcohol and 2.6 g (0.01 mol) of titanium lactate [(HO)₂Ti(C₃H₅O₃)₂] as a catalyst. The condensation reaction was performed at a temperature range of 180 to 230°C for 8 hr, during which the water generated was distilled off from the system. After the completion of the reaction, the catalyst was removed to obtain plant-derived polyol (B5-1), which was liquid at ordinary temperature and had eight side chains represented by C₆H₁₃ (hexyl group), an acid value of 1.2 mgKOH/g, a hydroxyl value of 60 mgKOH/g and an average number of functional groups of 2.5.

### (Synthesis Example 2)

To 1 mol (2340 g) of plant-derived polyol (B5-1), which was obtained in Synthesis Example 1 and had a hydroxyl value of 60 mgKOH/g, was added 0.01 mol (7.6 g) of tetrakis[tris(dimethylamino)phosphoranylidenamino] phosphonium hydroxide, and the mixture was dehydrated under reduced pressure at 100°C for 6 hr. Thereafter, addition polymerization with propylene oxide was carried out at a reaction temperature of 80°C under the maximum reaction pressure of 3.8 kg/cm², and then addition polymerization with ethylene oxide was carried out at a reaction temperature of 100°C under the maximum reaction pressure of 3.8 kg/cm² to obtain plant-derived polyol (B6-1). The polyol (B6-1) had eight side chains represented by C₆H₁₃ (hexyl group), a hydroxyl value of 49 mgKOH/g an average number of functional groups of 2.5 and a terminal oxyethylene group content of 15% by mass.

### (Synthesis Example 3)

To 1 mol (2340 g) of plant-derived polyol (B5-1), which was obtained in Synthesis Example 1 and had a hydroxyl value of 60 mgKOH/g, were added 4. 6 mol (525 g) of ε-caprolactone and 0.02 mol (8.1 g) of tin octanoate. The ring-opening polymerization was performed at 140°C for 2 hr to obtain plant-derived polyol (B7-1), which had eight side chains represented by C₆H₁₃ (hexyl group), a hydroxyl value of 49 mgKOH/g and an average number of functional groups of 2.5.

### (Synthesis Example 4)

To 1 mol (2340 g) of plant-derived polyol (B5-1), which was obtained in Synthesis Example 1 and had a hydroxyl value of 60 mgKOH/g, were added 7.3 mol (657 g) of 3-hydroxypropionic acid and 0.01 mol (2. 6 g) of titanium lactate. The condensation reaction was performed at a temperature range of 180 to 230°C for 8 hr, during which the water generated was distilled off from the system. After the completion of the reaction, the catalyst was removed to obtain plant-derived polyol (B8-1), which was liquid at ordinary temperature and had eight side chains represented by C₆H₁₃ (hexyl group), a hydroxyl value of 49 mgKOH/g and an average number of functional groups of 2.5.

### (Synthesis Example 5)

A reactor equipped with a stirrer, a thermometer, a nitrogen inlet tube and a reflux condenser was charged with 1192 g (4 mol) of a castor oil fatty acid having an acid value of 188 mgKOH/g as hydroxycarboxylic acids having 15 or more carbon atoms and OH group, 92 g (1 mol) of glycerin as a polyhydric alcohol and 2.6 g (0.01 mol) of titanium lactate [(HO)₂Ti (C₃H₅O₃)₂] as a catalyst. The condensation reaction was performed at a temperature range of 180 to 230°C for 7 hr, during which the water generated was distilled off from the system. After the completion of the reaction, the catalyst was removed to obtain plant-derived polyol (A5-1), which was liquid at ordinary temperature and had four side chains represented by C₆H₁₃ (hexyl group), an acid value of 0.4 mgKOH/g, a hydroxyl value of 120 mgKOH/g and an average number of functional groups of 2.6.

### <Other raw materials>

The raw materials, beside the plant-derived polyol, used in Examples and Comparative Examples are shown below.

### Plant-derived polyol (C-1):

Uric H-30 (produced by Itoh Oil Chemicals Co., Ltd., purified castor oil having an average number of functional groups of 2.7, an hydroxyl value of 163 mgKOH/g and 3 hydrocarbon chains represented by C₆H₁₃ (hexyl group));

### Polyether polyol (D-1):

having an average number of functional groups of approximately 3, a hydroxyl value of 34 mgKOH/g, and an oxypropylene group content of 100% by mass in all the oxyalkylene groups;

### Polyether polyol (D-2):

having an average number of functional groups of approximately 3, a hydroxyl value of 210 mgKOH/g, an oxypropylene group content of 70% by mass and an oxyethylene group content of 30% by mass in all the oxyalkylene groups; Polyisocyanate 1:

Cosmonate T-80 (produced by Mitsui Chemicals Polyurethanes, Inc., a mixture of 2, 4-TDI and 2, 6-TDI in a mass ratio of 80:20);

### Chain extender 1:

Dipropylene glycol;

### Surfactant 1:

Silicon surfactant SRX-294A (produced by Dow Corning Toray Silicon Co., Ltd.);

### Catalyst 1:

Amine catalyst Minico L-1020 (produced by Katsuzai Chemicals Corp., a 33% dipropylene glycol solution of triethylenediamine); and

### Catalyst 2:

Organotin compound DABCO T-9 (produced by Air Products and Chemicals, Inc., tin octanoate).

### <Preparation of polyol (A)>

Polyols (A-1) to (A-6) shown in Tables 1-1 and 1-2 were prepared by mixing the polyols (B5-1) to (B8-1) and (C-1). Further, as Polyol (A-7), Polyol (AS-1) was used as it is. The properties of the Polyols are shown in Tables 1-1 and 1-2.

**Table 1-1**

| Polyol | | A-1 | | A-2 | | A-3 | |
|---|---|---|---|---|---|---|---|
| Polyols to be used (parts by weight) | | (B5-1) 40 | (C-1) 60 | (B5-1) 30 | (C-1) 70 | (B5-1) 50 | (C-1) 50 |
| Side chain: | | | | | | | |
| | Number of carbon atoms | 6 | | 6 | | 6 | |
| | Number per molecule | 4.0 | | 3.7 | | 4.4 | |
| Average number of functional group | | 2.7 | | 2.7 | | 2.7 | |
| Hydroxyl value [mgKOH/g] | | 122 | | 132 | | 112 | |

**Table 1-2**

| Polyol | A-4 | | A-5 | | A-6 | | A-7 |
|---|---|---|---|---|---|---|---|
| Polyols to be used (parts by weight) | (B6-1) 40 | (C-1) 60 | (B7-1) 40 | (C-1) 60 | (B8-1) 40 | (C-1) 60 | (A5-1) 100 |
| Side chain: | | | | | | | |
| Number of carbon atoms | 6 | | 6 | | 6 | | 6 |
| Number per molecule | 3.9 | | 3.9 | | 3.9 | | 4.0 |
| Average number of functional group | 2.7 | | 2.7 | | 2.7 | | 2.6 |
| Hydroxyl value [mgKOH/g] | 117 | | 117 | | 117 | | 120 |

### [Examples 1 to 11 and Comparative Examples 1 to 7]

A flexible polyurethane foam was produced using the above raw materials by a slab foaming process.

### (Formulations and results of foaming evaluation)

The components listed in Tables 2 and 3, except Catalyst 2 and Polyisocyanate 1, were stirred by a hand mixer. Subsequently, Catalyst 2 was added to the mixture, the resultant mixture stirred for 10 sec, and immediately Polyisocyanate 1 was added in such an amount to obtain the NCO index shown in Tables 2 and 3, followed by mixing. The resultant mixture was put into a foaming box of 20 cm x 20 cm x 20 cm, foamed and cured to obtain a flexible polyurethane foam by a slab foaming process. The resulting flexible polyurethane foam was kept at room temperature for one day and then used for property measurement. The results are shown in Tables 2 and 3.

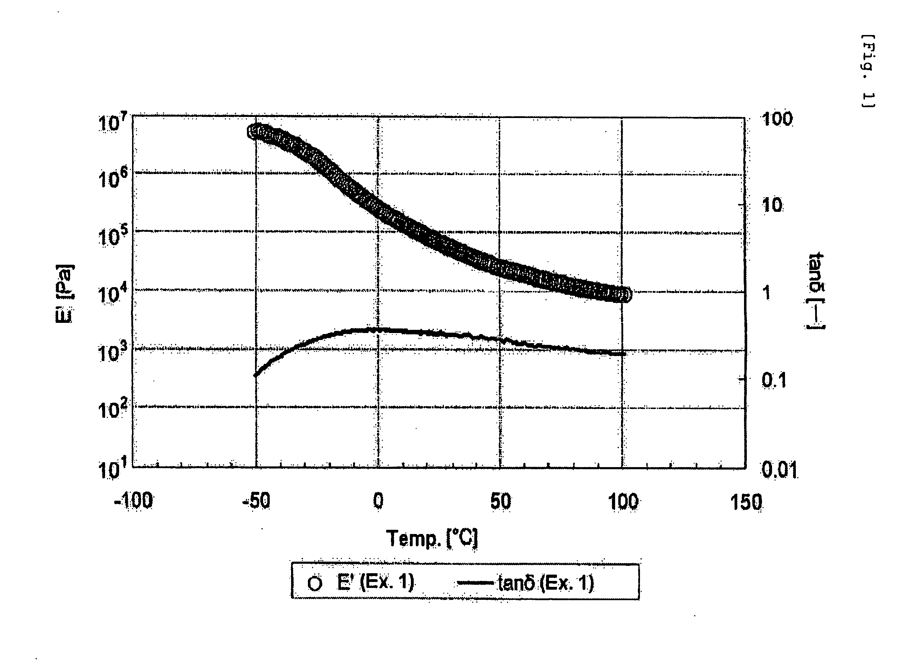

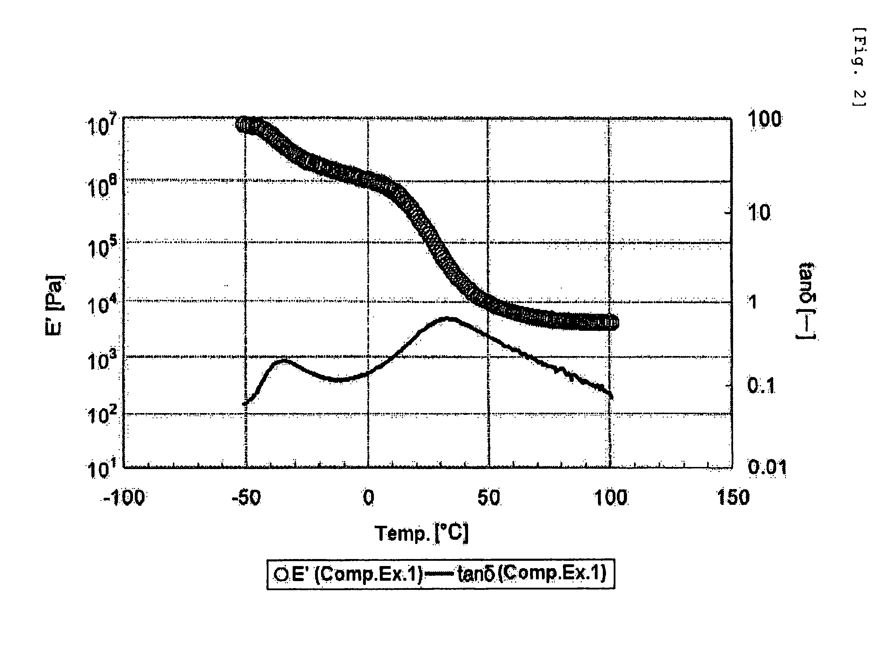

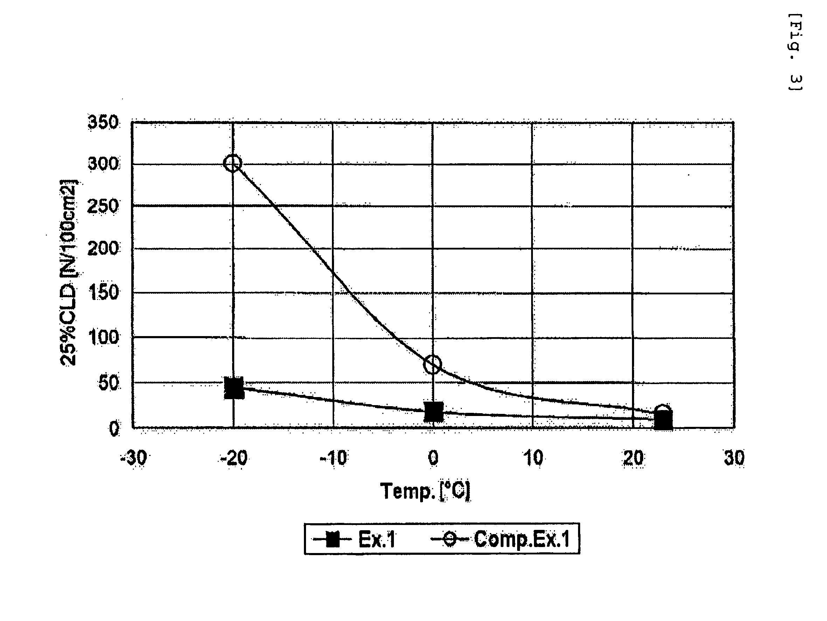

Fig. 1 shows the results of the viscoelasticity measurement for the flexible polyurethane foam obtained in Example 1 and Fig. 2 shows the results of the viscoelasticity measurement for the flexible polyurethane foam obtained in Comparative Example 1. Fig. 3 shows the results of the 25% CLD measurement at each temperature (-20°C, 0°C and 23°C) in Example 1 and Comparative Example 1.

**Table 2**

| | | Ex. 1 | Ex. 2 | Ex. 3 | Ex. 4 | Ex. 5 | Ex. 6 | Ex. 7 | Ex. 8 | Ex. 9 | Ex. 10 | Ex. 11 |
|---|---|---|---|---|---|---|---|---|---|---|---|---|
| Plant-derived polyol (A): Type | | A-1 | A-1 | A-1 | A-1 | A-1 | A-2 | A-3 | A-4 | A-5 | A-6 | A-7 |
| | Amount used | 100 | 100 | 100 | 100 | 100 | 100 | 100 | 100 | 100 | 100 | 100 |
| Chain extender 1 | | 4 | 4 | 4 | 4 | 4 | 4 | 4 | 4 | 4 | 4 | 4 |
| Water | | 2 | 2 | 2 | 1.5 | 2.5 | 2 | 2 | 2 | 2 | 2 | 2 |
| Surfactant 1 | | 1 | 1 | 1 | 1 | 1 | 1 | 1 | 1 | 1 | 1 | 1 |
| Catalyst 1 | | 1 | 1 | 1 | 1 | 1 | 1 | 1 | 1 | 1 | 1 | 1 |
| Catalyst 2 | | 0.4 | 0.4 | 0.4 | 0.4 | 0.4 | 0.4 | 0.4 | 0.4 | 0.4 | 0.4 | 0.4 |
| Polyisocyanate 1 | | 34.7 | 39.1 | 43.4 | 30.8 | 38.6 | 36.0 | 33.4 | 34.2 | 34.2 | 34.2 | 34.5 |
| | NCO Index | 0.80 | .90 | 1.00 | 0.80 | 0.80 | 0.80 | 0.80 | 0.80 | 0.80 | 0.80 | 0.80 |
| Content of plant-derived polyol in the composition [% by mass] | | 70 | 68 | 66 | 72 | 68 | 69 | 71 | 70 | 70 | 70 | 70 |
| Cream time [sec] | | 15 | 15 | 16 | 15 | 15 | 16 | 15 | 11 | 12 | 11 | 14 |
| Rise time [sec] | | 145 | 122 | 118 | 180 | 123 | 132 | 129 | 110 | 116 | 117 | 135 |
| Dco[kg/m³] | | 49.5 | 44.9 | 44.1 | 61.1 | 36.8 | 48.8 | 42.4 | 46.2 | 45.3 | 45.5 | 48.6 |
| BR [%] | | 3 | 6 | 17 | 4 | 7 | 7 | 2 | 7 | 6 | 6 | 5 |
| 25% CLD [N/100cm²] | | 9.3 | 21.5 | 46.4 | 8.5 | 9.8 | 13.6 | 8.9 | 8.3 | 9.0 | 8.6 | 11.0 |
| Air Flow [cc/sec·cm²] | | 19.0 | 11.3 | 1.1 | 20.8 | 28.7 | 30.7 | 15.0 | 9.6 | 13.4 | 11.9 | 3.5 |

| | | | | | | | | | | | | |
|---|---|---|---|---|---|---|---|---|---|---|---|---|
| The unit of component amount: parts by mass Comparative Example | | | | | | | | | | | | |

**Table 3**

| | Comp. Ex. 1 | Comp. Ex. 2 | Comp. Ex. 3 | Comp. Ex. 4 | Comp. Ex. 5 | Comp. Ex. 6 | Comp. Ex. 7 |
|---|---|---|---|---|---|---|---|
| Polyether polyol (D-1) | 40 | 40 | 40 | 40 | 40 | 30 | 50 |
| Polyether polyol (D-2) | 60 | 60 | 60 | 60 | 60 | 70 | 50 |
| Chain extender 1 | 4 | 4 | 4 | 4 | 4 | 4 | 4 |
| Water | 2 | 2 | 2 | 1.5 | 2.5 | 2 | 2 |
| Surfactant 1 | 1 | 1 | 1 | 1 | 1 | 1 | 1 |
| Catalyst 1 | 0.3 | 0.3 | 0.3 | 0.3 | 0.3 | 0.3 | 0.3 |
| Catalyst 2 | 0.1 | 0.1 | 0.1 | 0.1 | 0.1 | 0.1 | 0.1 |
| Polyisocyanate 1 | 36.9 | 41.5 | 46.2 | 33.1 | 40.8 | 39.1 | 34.7 |
| NCO Index | 0.80 | 0.90 | 1.00 | 0.80 | 0.80 | 0.80 | 0.80 |
| Content of plant-derived polyol in the composition [% by mass] | 0 | 0 | 0 | 0 | 0 | 0 | 0 |
| Cream time [sec] | 14 | 13 | 12 | 13 | 14 | 15 | 15 |
| Rise time [sec] | 130 | 111 | 90 | 158 | 111 | 121 | 117 |
| Dco[kg/m³] | 50.4 | 46.1 | 43.2 | 60.5 | 37.2 | 51.1 | 49.5 |
| BR [%] | 4 | 8 | 11 | 3 | 10 | 3 | 6 |
| 25% CLD [N/100cm²] | 15.8 | 29.5 | 60.2 | 14.9 | 17.5 | 38.5 | 9.9 |
| Air Flow [cc/sec·cm²] | 22.8 | 8.5 | 2.1 | 4.3 | 42.8 | 19.5 | 16.9 |

| | | | | | | | |
|---|---|---|---|---|---|---|---|
| The unit of component amount: parts by mass | | | | | | | |

It is found from Tables 2 and 3 that the flexible polyurethane foams obtained in Examples 1 to 10 in which the content of the plant-derived polyol in the compositions is approximately 70% by mass, even though the plant-derived components account for most of the foams, show low rebound property that is in no way inferior to the foams of Comparative Examples 1 to 7, which contain no plant-derived components, and exhibit suitable properties for a plant-derived polyurethane foam having low rebound property, which can contribute to reducing environmental burdens. Further, as shown in Fig. 3, the polyurethane foam having low rebound property of Example 1 shows a smaller degree of increase in hardness at a temperature of 23 °C or lower compared to the foam of Comparative Example 1. That is, it is proved that the plant-derived polyurethane foam has also an excellent property that the increase in hardness under low temperature conditions can be suppressed, which is a property required for low-resilient polyurethane foams having low rebound property, compared to a conventional polyurethane foam derived from petroleum.

### [INDUSTRIAL APPLICABILITY]

The polyurethane foam composition of the present invention can provide a plant-derived polyurethane foam that contributes to reducing environmental burdens and has excellent low rebound property, particularly a characteristic that the increase in hardness at low temperatures is suppressed. Particularly, the polyurethane foam composition is suitable for a shock absorber, a sound absorbing material and a vibration absorbing material, and can be suitably used for a cushioning material for a chair and a mattress.

## Claims

1. A polyurethane foam composition comprising a polyol, a catalyst, a surfactant, a foaming agent and a polyisocyanate, wherein
the polyol contains, at least, (A) a polyol that is produced by using a raw material obtained from plant-derived oil, contains more than three side chains per molecule, each side chain comprising a hydrocarbon chain having 4 or more carbon atoms, and has an average number of functional groups of 1.5 to 4.5 and a hydroxyl value of 80 to 140 mgKOH/g,
the polyol (A) is a polyol having at least a structure in which a hydroxycarboxylic acid having 15 or more carbon atoms obtained from plant-derived oil is condensed with a polyhydric alcohol, wherein the content of the polyol (A) is 25 to 100% by mass, with respect to 100% by mass of all the polyol components, and
the polyol (A) is a mixture of at least
(B) a polyol that is produced by using a raw material obtained from plant-derived oil and has an average number of functional groups of 1.5 to 4.5 and a hydroxyl value of 20 to 70 mgKOH/g, and
(C) a polyol that is obtained from plant-derived oil and has an average number of functional groups of 1.5 to 4.5 and a hydroxyl value of 140 to 300 mgKOH/g.

2. The polyurethane foam composition according to Claim 1, which is a composition for a polyurethane foam having low rebound property.

3. The polyurethane foam composition according to Claim 1, wherein the polyol (A) is one or more kinds of polyol selected from the group consisting of a polyester polyol (A1) having at least a structure in which 3.1 to 17 mol of a hydroxycarboxylic acid having 15 or more carbon atoms obtained from plant-derived oil are condensed with 1 mol of a polyhydric alcohol having 2 to 6 hydroxyl groups per molecule, a polyol (A2) given by further adding propylene oxide and/or ethylene oxide to the polyester polyol (A1), a polyol (A3) given by further adding a lactone to the polyester polyol (A1), and a polyol (A4) given by further adding a hydroxycarboxylic acid having a primary hydroxyl group to the polyester polyol (A1).

4. The polyurethane foam composition according to Claim 1, wherein the polyol (A) is one or more kinds of polyols selected from the group consisting of a polyester polyol (A5) having at least a structure in which 3.1 to 17 mol of a hydroxycarboxylic acid are condensed with 1 mol of a polyhydric alcohol having 2 to 6 hydroxyl groups per molecule, wherein the hydroxycarboxylic acid contains a castor oil fatty acid containing, as a main component, ricinoleic acid obtained from castor oil and/or a hydrogenated castor oil fatty acid containing, as a main component, 12-hydroxystearic acid given by saturating the carbon-carbon double bonds in the castor oil fatty acid, a polyol (A6) given by further adding propylene oxide and/or ethylene oxide to the polyester polyol (A5), a polyol (A7) given by further adding a lactone to the polyester polyol (A5), and a polyol (A8) given by further adding a hydroxycarboxylic acid having a primary hydroxyl group to the polyester polyol (A5).

5. The polyurethane foam composition according to Claim 1, comprising 25 to 55% by mass of the polyol (B) and 45 to 75% by mass of the polyol (C) with respect to 100% by mass of the total amount of the polyols (B) and (C).

6. The polyurethane foam composition according to Claim 1, wherein the polyol (B) is a polyol having at least a structure in which a hydroxycarboxylic acid having 15 or more carbon atoms obtained from plant-derived oil is condensed with a polyhydric alcohol.

7. The polyurethane foam composition according to Claim 1, wherein the polyol (B) is one or more kinds of polyols selected from the group consisting of a polyester polyol (B1) having at least a structure in which 3 to 30 mol of a hydroxycarboxylic acid having 15 or more carbon atoms obtained from plant-derived oil are condensed with 1 mol of a polyhydric alcohol having 2 to 6 hydroxyl groups per molecule, a polyol (B2) given by further adding propylene oxide and/or ethylene oxide to the polyester polyol (B1), a polyol (B3) given by further adding a lactone to the polyester polyol (B1), and a polyol (B4) given by further adding a hydroxycarboxylic acid having a primary hydroxyl group to the polyester polyol (B1).

8. The polyurethane foam composition according to Claim 1, wherein the polyol (B) is one or more kinds of polyols selected from the group consisting of a polyester polyol (B5) having at least a structure in which 3 to 30 mol of a hydroxycarboxylic acid are condensed with 1 mol of a polyhydric alcohol having 2 to 6 hydroxyl groups per molecule, wherein the hydroxycarboxylic acid contains a castor oil fatty acid containing, as a main component, ricinoleic acid obtained from castor oil and/or a hydrogenated castor oil fatty acid containing, as a main component, 12-hydroxystearic acid given by saturating the carbon-carbon double bonds in the castor oil fatty acid, a polyol (B6) given by further adding propylene oxide and/or ethylene oxide to the polyester polyol (B5), a polyol (B7) given by further adding a lactone to the polyester polyol (B5), and a polyol (B8) given by further adding a hydroxycarboxylic acid having a primary hydroxyl group to the polyester polyol (B5).

9. The polyurethane foam composition according to Claim 1, wherein the polyol (C) is castor oil and/or its derivative.

10. The polyurethane foam composition according to Claim 1, wherein the polyol (C) is a soybean oil derivative.

11. A polyol comprising at least (A) a polyol that contains at least a structure in which a hydroxycarboxylic acid having 15 or more carbon atoms obtained from plant-derived oil is condensed with a polyhydric alcohol, contains more than three side chains per molecule, each side chain comprising a hydrocarbon chain having 4 or more carbon atoms, and has an average number of functional groups of 1.5 to 4.5 and a hydroxyl value of 80 to 140 mgKOH/g, wherein the polyol (A) is a mixture of at least
(B) a polyol that contains at least a structure in which a hydroxycarboxylic acid having 15 or more carbon atoms obtained from plant-derived oil is condensed with a polyhydric alcohol, and has an average number of functional groups of 1.5 to 4.5 and a hydroxyl value of 20 to 70 mgKOH/g, and
(C) a polyol that is obtained from plant-derived oil and has an average number of functional groups of 1.5 to 4.5 and a hydroxyl value of 140 to 300 mgKOH/g , and wherein the content of polyol (A) is 25 to 100% by mass with respect to 100% by mass of all the polyol components.

12. A polyurethane foam produced by foaming the polyurethane foam composition according to any of Claims 1 to 10.

13. A process for producing a polyurethane foam comprising foaming the polyurethane foam composition according to any of Claims 1 to 10.

14. A polyurethane foam having low rebound property, which is produced by foaming the polyurethane foam composition according to any of Claims 1 to 10.

15. A polyurethane foam according to claim 14, which has a value, obtained by dividing the foam hardness at -20°C by the foam hardness at 23°C, of 8 or less.

16. A process for producing a polyurethane foam having low rebound property, comprising foaming the polyurethane foam composition according to any of Claims 1 to 10.

17. A process for producing a polyurethane foam having low rebound property according to Claims 16, wherein a polyol that has, on average, not less than 3.1 side chains per molecule, each side chain comprising a hydrocarbon chain having 4 or more carbon atoms, and has an average number of functional groups of 1.5 to 4. 5 and a hydroxyl value of 80 to 140 mgKOH/g is used.

18. A polyol, which has, on average, 3.1 or more side chains per molecule, each side chain comprising a hydrocarbon chain having 4 or more carbon atoms, and has an average number of functional groups of 1.5 to 4.5 and a hydroxyl value of 80 to 140 mgKOH/g, wherein the polyol enables to produce a polyurethane foam having low rebound property, which has a value, obtained by dividing the foam hardness at -20°C by the foam hardness at 23°C, of 8 or less.

## Patentansprüche

1. Polyurethan-Schaumstoffzusammensetzung, umfassend ein Polyol, einen Katalysator, ein oberflächenaktives Mittel, ein Schäumungsmittel und ein Polyisocyanat, wobei
das Polyol mindestens (A) ein Polyol enthält, das unter Verwendung eines aus pflanzlichem Öl erhaltenen Rohmaterials hergestellt ist, das mehr als 3 Seitenketten pro Molekül enthält, wobei jede Seitenkette eine Kohlenwasserstoffkette mit 4 oder mehr Kohlenstoffatomen umfasst, und eine durchschnittliche Anzahl an funktionellen Gruppen von 1,5 bis 4,5 und einen Hydroxylwert von 80 bis 140 mg KOH/g aufweist,
das Polyol (A) ein Polyol mit mindestens einer Struktur, in der eine aus pflanzlichem Öl erhaltene Hydroxycarbonsäure mit 15 oder mehr Kohlenstoffatomen mit einem mehrwertigen Alkohol kondensiert ist, wobei der Gehalt des Polyols (A) 25 bis 100 Massen-% beträgt, in Bezug auf 100 Massen-% aller Polyol-Bestandteile, und
das Polyol (A) eine Mischung ist aus mindestens
(B) einem Polyol, das unter Verwendung eines aus pflanzlichem Öl erhaltenen Rohmaterials hergestellt ist und eine durchschnittliche Anzahl an funktionellen Gruppen von 1,5 bis 4,5 und einen Hydroxylwert von 20 bis 70 mg KOH/g aufweist, und
(C) einem Polyol, das aus pflanzlichem Öl erhalten ist und eine durchschnittliche Anzahl an funktionellen Gruppen von 1,5 bis 4,5 und einen Hydroxylwert von 140 bis 300 mg KOH/g aufweist.

2. Polyurethan-Schaumstoffzusammensetzung nach Anspruch 1, die eine Zusammensetzung für einen Polyurethan-Schaumstoff mit geringer Rückpralleigenschaft ist.

3. Polyurethan-Schaumstoffzusammensetzung nach Anspruch 1, wobei das Polyol (A) eine oder mehrere Art(en) Polyol, ausgewählt aus der Gruppe bestehend aus einem Polyesterpolyol (A1) mit mindestens einer Struktur, in der 3,1 bis 17 Mol einer aus pflanzlichem Öl erhaltenen Hydroxycarbonsäure mit 15 oder mehr Kohlenstoffatomen mit 1 Mol eines mehrwertigen Alkohols mit 2 bis 6 Hydroxylgruppen pro Molekül kondensiert ist, einem Polyol (A2), erlangt durch ferner Zugeben von Propylenoxid und/oder Ethylenoxid zu dem Polyesterpolyol (A1), einem Polyol (A3), erlangt durch ferner Zugeben eines Lactons zu dem Polyesterpolyol (A1), und einem Polyol (A4), erlangt durch ferner Zugeben einer Hydroxycarbonsäure mit einer primären Hydroxylgruppe zu dem Polyesterpolyol (A1), ist.

4. Polyurethan-Schaumstoffzusammensetzung nach Anspruch 1, wobei das Polyol (A) eine oder mehrere Art(en) Polyole, ausgewählt aus der Gruppe bestehend aus einem Polyesterpolyol (A5) mit mindestens einer Struktur, in der 3,1 bis 17 Mol einer Hydroxycarbonsäure mit 1 Mol eines mehrwertigen Alkohols mit 2 bis 6 Hydroxylgruppen pro Molekül kondensiert ist, wobei die Hydroxycarbonsäure eine Rizinusölfettsäure enthält, die als eine Hauptkomponente aus Rizinusöl erhaltene Rizinolsäure enthält und/oder eine hydrierte Rizinusölfettsäure, die als eine Hauptkomponente durch Sättigen der Kohlenstoff-Kohlenstoff-Doppelbindungen in der Rizinusölfettsäure erlangte 12-Hydroxystearinsäure enthält, einem Polyol (A6), erlangt durch ferner Zugeben von Propylenoxid und/oder Ethylenoxid zu dem Polyesterpolyol (A5), einem Polyol (A7), erlangt durch ferner Zugeben eines Lactons zu dem Polyesterpolyol (A5), und einem Polyol (A8), erlangt durch ferner Zugeben einer Hydroxycarbonsäure mit einer primären Hydroxylgruppe zu dem Polyesterpolyol (A5), ist.

5. Polyurethan-Schaumstoffzusammensetzung nach Anspruch 1, umfassend 25 bis 55 Massen-% des Polyols (B) und 45 bis 75 Massen-% des Polyols (C) in Bezug auf 100 Massen-% der gesamten Menge der Polyole (B) und (C).

6. Polyurethan-Schaumstoffzusammensetzung nach Anspruch 1, wobei das Polyol (B) ein Polyol mit mindestens einer Struktur ist, in der eine aus pflanzlichem Öl erhaltene Hydroxycarbonsäure mit 15 oder mehr Kohlenstoffatomen mit einem mehrwertigen Alkohol kondensiert ist.

7. Polyurethan-Schaumstoffzusammensetzung nach Anspruch 1, wobei das Polyol (B) ein oder mehrere Art(en) Polyole, ausgewählt aus der Gruppe bestehend aus einem Polyesterpolyol (B1) mit mindestens einer Struktur, in der 3 bis 30 Mol einer aus pflanzlichem Öl erhaltenen Hydroxycarbonsäure mit 15 oder mehr Kohlenstoffatomen mit 1 Mol eines mehrwertigen Alkohols mit 2 bis 6 Hydroxylgruppen pro Molekül kondensiert ist, einem Polyol (B2), erlangt durch ferner Zugeben von Propylenoxid und/oder Ethylenoxid zu dem Polyesterpolyol (B1), einem Polyol (B3), erlangt durch ferner Zugeben eines Lactons zu dem Polyesterpolyol (B1), und einem Polyol (B4), erlangt durch ferner Zugeben einer Hydroxycarbonsäure mit einer primären Hydroxylgruppe zu dem Polyesterpolyol (B1), ist.

8. Polyurethan-Schaumstoffzusammensetzung nach Anspruch 1, wobei das Polyol (B) eine oder mehrere Art(en) Polyole, ausgewählt aus der Gruppe bestehend aus einem Polyesterpolyol (B5) mit mindestens einer Struktur, in der 3 bis 30 Mol einer Hydroxycarbonsäure mit 1 Mol eines mehrwertigen Alkohols mit 2 bis 6 Hydroxygruppen pro Molekül kondensiert ist, wobei die Hydroxycarbonsäure eine Rizinusölfettsäure enthält, die als eine Hauptkomponente aus Rizinusöl erhaltene Rizinolsäure enthält und/oder eine hydrierte Rizinusölfettsäure, die als eine Hauptkomponente durch Sättigen der Kohlenstoff-Kohlenstoff-Doppelbindungen in der Rizinusölfettsäure erlangte 12-Hydroxystearinsäure enthält, einem Polyol (B6), erlangt durch ferner Zugeben von Propylenoxid und/oder Ethylenoxid zu dem Polyesterpolyol (B5), einem Polyol (B7), erlangt durch ferner Zugeben eines Lactons zu dem Polyesterpolyol (B5) und einem Polyol (B8), erlangt durch ferner Zugeben einer Hydroxycarbonsäure mit einer primären Hydroxylgruppe zu dem Polyesterpolyol (B5), ist.

9. Polyurethan-Schaumstoffzusammensetzung nach Anspruch 1, wobei das Polyol (C) ein Rizinusöl und/oder dessen Derivat ist.

10. Polyurethan-Schaumstoffzusammensetzung nach Anspruch 1, wobei das Polyol (C) ein Sojabohnenölderivat ist.

11. Polyol, umfassend mindestens (A) ein Polyol, das mindestens eine Struktur enthält, in der eine aus pflanzlichem Öl erhaltene Hydroxycarbonsäure mit 15 oder mehr Kohlenstoffatomen mit einem mehrwertigen Alkohol kondensiert ist, mehr als drei Seitenketten pro Molekül enthält, wobei jede Seitenkette eine Kohlenwasserstoffkette mit 4 oder mehr Kohlenstoffatomen umfasst, und eine durchschnittliche Anzahl an funktionellen Gruppen von 1,5 bis 4,5 und einen Hydroxylwert von 80 bis 140 mg KOH/g aufweist, wobei das Polyol (A) eine Mischung ist aus mindestens
(B) einem Polyol, das mindestens eine Struktur enthält, in der eine aus pflanzlichem Öl erhaltene Hydroxycarbonsäure mit 15 oder mehr Kohlenstoffatomen mit einem mehrwertigen Alkohol kondensiert ist, und eine durchschnittliche Anzahl an funktionellen Gruppen von 1,5 bis 4,5 und einen Hydroxylwert von 20 bis 70 mg KOH/g aufweist, und
(C) einem Polyol, das aus pflanzlichem Öl erhalten ist und eine durchschnittliche Anzahl an funktionellen Gruppen von 1,5 bis 4,5 und einen Hydroxylwert von 140 bis 300 mg KOH/g aufweist, und wobei der Gehalt an Polyol (A) 25 bis 100 Massen-% beträgt in Bezug auf 100 Massen-% aller Polyol-Bestandteile.

12. Polyurethan-Schaumstoffzusammensetzung, hergestellt durch Schäumen der Polyurethan-Schaumstoffzusammensetzung nach einem der Ansprüche 1 bis 10.

13. Verfahren zum Herstellen eines Polyurethan-Schaumstoffs, umfassend Schäumen der Polyurethan-Schaumstoffzusammensetzung nach einem der Ansprüche 1 bis 10.

14. Polyurethan-Schaumstoff mit geringer Rückpralleigenschaft, der hergestellt ist durch Schäumen der Polyurethan-Schaumstoffzusammensetzung nach einem der Ansprüche 1 bis 10.

15. Polyurethan-Schaumstoff nach Anspruch 14, der einen Wert, erhalten durch Teilen der Schaumhärte bei -20 °C durch die Schaumhärte bei 23 °C, von 8 oder weniger aufweist.

16. Verfahren zum Herstellen eines Polyurethan-Schaumstoffs mit geringer Rückpralleigenschaft, umfassend Schäumen der Polyurethan-Schaumstoffzusammensetzung nach einem der Ansprüche 1 bis 10.

17. Verfahren zum Herstellen eines Polyurethan-Schaumstoffs mit geringer Rückpralleigenschaft nach Anspruch 16, wobei ein Polyol, das im Durchschnitt nicht weniger als 3,1 Seitenketten pro Molekül aufweist, wobei jede Seitenkette eine Kohlenwasserstoffkette mit 4 oder mehr Kohlenstoffatomen umfasst, und eine durchschnittliche Anzahl an funktionellen Gruppen von 1,5 bis 4,5 und einen Hydroxylwert von 80 bis 140 mg KOH/g aufweist, verwendet wird.

18. Polyol, das im Durchschnitt 3,1 oder mehr Seitenketten pro Molekül aufweist, jede Seitenkette eine Kohlenwasserstoffkette mit 4 oder mehr Kohlenstoffatomen umfasst, und eine durchschnittliche Anzahl an funktionellen Gruppen von 1,5 bis 4,5 und einen Hydroxylwert von 80 bis 140 mg KOH/g aufweist, wobei es das Polyol erlaubt, einen Polyurethan-Schaumstoff mit geringer Rückpralleigenschaft, die einen Wert, erhalten durch Teilen der Schaumhärte bei -20 °C durch die Schaumhärte bei 23 °C, von 8 oder weniger aufweist, herzustellen.

## Revendications

1. Composition pour mousse de polyuréthane, comprenant un polyol, un catalyseur, un tensioactif, un agent de moussage et un polyisocyanate, dans laquelle
- le polyol contient, au moins, un polyol (A) que l'on a produit en utilisant une matière première obtenue à partir d'une huile végétale, qui comporte plus de trois chaînes latérales par molécule, lesquelles chaînes latérales comprennent chacune une chaîne hydrocarbonée comportant 4 atomes de carbone ou plus, dont le nombre moyen de groupes fonctionnels vaut de 1,5 à 4,5 et dont l'indice d'hydroxyle vaut de 80 à 140 mgKOH/g,
- et ce polyol (A) est un polyol qui présente au moins une structure dans laquelle un acide hydroxy-carboxylique comportant 15 atomes de carbone ou plus, obtenu à partir d'une huile végétale, est condensé avec un polyalcool,
et dans laquelle la proportion du polyol (A) vaut de 25 à 100 %, en masse rapportée à une masse de 100 % pour le total des composants de type polyol, étant entendu que
le polyol (A) est un mélange d'au moins
B) un polyol que l'on a produit en utilisant une matière première obtenue à partir d'une huile végétale, dont le nombre moyen de groupes fonctionnels vaut de 1,5 à 4,5 et dont l'indice d'hydroxyle vaut de 20 à 70 mgKOH/g,
C) et un polyol que l'on a obtenu à partir d'une huile végétale, dont le nombre moyen de groupes fonctionnels vaut de 1,5 à 4,5 et dont l'indice d'hydroxyle vaut de 140 à 300 mgKOH/g.

2. Composition pour mousse de polyuréthane, conforme à la revendication 1, qui est une composition pour mousse de polyuréthane à faible rebond.

3. Composition pour mousse de polyuréthane, conforme à la revendication 1, dans laquelle le polyol (A) comporte un ou plusieurs polyol(s) choisi(s) dans l'ensemble formé par un polyester-polyol (A1) comprenant au moins une structure dans laquelle de 3,1 à 17 moles d'un acide hydroxy-carboxylique comportant 15 atomes de carbone ou plus, obtenu à partir d'une huile végétale, sont condensées avec 1 mole d'un polyalcool comportant de 2 à 6 groupes hydroxyle par molécule, un polyol (A2) formé par addition supplémentaire d'oxyde d'éthylène et/ou d'oxyde de propylène sur le polyester-polyol (Al), un polyol (A3) formé par addition supplémentaire d'une lactone sur le polyester-polyol (Al), et un polyol (A4) formé par addition supplémentaire d'un acide hydroxy-carboxylique doté d'un groupe hydroxyle primaire sur le polyester-polyol (A1).

4. Composition pour mousse de polyuréthane, conforme à la revendication 1, dans laquelle le polyol (A) comporte un ou plusieurs polyol(s) choisi(s) dans l'ensemble formé par un polyester-polyol (A5) comprenant au moins une structure dans laquelle de 3,1 à 17 moles d'un acide hydroxy-carboxylique sont condensées avec 1 mole d'un polyalcool comportant de 2 à 6 groupes hydroxyle par molécule, lequel acide hydroxy-carboxylique contient un acide gras d'huile de ricin qui comprend, en tant que composant principal, de l'acide ricinoléique obtenu à partir d'huile de ricin, et/ou un acide gras d'huile de ricin hydrogénée qui comprend, en tant que composant principal, de l'acide 12-hydroxy-stéarique obtenu par saturation des doubles liaisons carbone-carbone de l'acide gras d'huile de ricin, un polyol (A6) formé par addition supplémentaire d'oxyde d'éthylène et/ou d'oxyde de propylène sur le polyester-polyol (A5), un polyol (A7) formé par addition supplémentaire d'une lactone sur le polyester-polyol (A5), et un polyol (A8) formé par addition supplémentaire d'un acide hydroxy-carboxylique doté d'un groupe hydroxyle primaire sur le polyester-polyol (A5).

5. Composition pour mousse de polyuréthane, conforme à la revendication 1, qui comprend de 25 à 55 % en masse d'un polyol (B) et de 45 à 75 % en masse d'un polyol (C), ces masses étant rapportées à une masse de 100 % pour le total des polyols (B) et (C).

6. Composition pour mousse de polyuréthane, conforme à la revendication 1, dans laquelle le polyol (B) est un polyol comportant au moins une structure dans laquelle un acide hydroxy-carboxylique comportant 15 atomes de carbone ou plus, obtenu à partir d'une huile végétale, est condensé avec un polyalcool.

7. Composition pour mousse de polyuréthane, conforme à la revendication 1, dans laquelle le polyol (B) comporte un ou plusieurs polyol(s) choisi(s) dans l'ensemble formé par un polyester-polyol (B1) comprenant au moins une structure dans laquelle de 3 à 30 moles d'un acide hydroxy-carboxylique comportant 15 atomes de carbone ou plus, obtenu à partir d'une huile végétale, sont condensées avec 1 mole d'un polyalcool comportant de 2 à 6 groupes hydroxyle par molécule, un polyol (B2) formé par addition supplémentaire d'oxyde d'éthylène et/ou d'oxyde de propylène sur le polyester-polyol (B1), un polyol (B3) formé par addition supplémentaire d'une lactone sur le polyester-polyol (B1), et un polyol (B4) formé par addition supplémentaire d'un acide hydroxy-carboxylique doté d'un groupe hydroxyle primaire sur le polyester-polyol (B1).

8. Composition pour mousse de polyuréthane, conforme à la revendication 1, dans laquelle le polyol (B) comporte un ou plusieurs polyol(s) choisi(s) dans l'ensemble formé par un polyester-polyol (B5) comprenant au moins une structure dans laquelle de 3 à 30 moles d'un acide hydroxy-carboxylique sont condensées avec 1 mole d'un polyalcool comportant de 2 à 6 groupes hydroxyle par molécule, lequel acide hydroxy-carboxylique contient un acide gras d'huile de ricin qui comprend, en tant que composant principal, de l'acide ricinoléique obtenu à partir d'huile de ricin, et/ou un acide gras d'huile de ricin hydrogénée qui comprend, en tant que composant principal, de l'acide 12-hydroxy-stéarique obtenu par saturation des doubles liaisons carbone-carbone de l'acide gras d'huile de ricin, un polyol (B6) formé par addition supplémentaire d'oxyde d'éthylène et/ou d'oxyde de propylène sur le polyester-polyol (B5), un polyol (B7) formé par addition supplémentaire d'une lactone sur le polyester-polyol (B5), et un polyol (B8) formé par addition supplémentaire d'un acide hydroxy-carboxylique doté d'un groupe hydroxyle primaire sur le polyester-polyol (B5).

9. Composition pour mousse de polyuréthane, conforme à la revendication 1, dans laquelle le polyol (C) est de l'huile de ricin et/ou un dérivé d'huile de ricin.

10. Composition pour mousse de polyuréthane, conforme à la revendication 1, dans laquelle le polyol (C) est un dérivé d'huile de soja.

11. Polyol comprenant, au moins, un polyol (A) qui comporte au moins une structure dans laquelle un acide hydroxy-carboxylique comportant 15 atomes de carbone ou plus, obtenu à partir d'une huile végétale, est condensé avec un polyalcool, qui contient plus de trois chaînes latérales par molécule, lesquelles chaînes latérales comprennent chacune une chaîne hydrocarbonée comportant 4 atomes de carbone ou plus, dont le nombre moyen de groupes fonctionnels vaut de 1,5 à 4,5 et dont l'indice d'hydroxyle vaut de 80 à 140 mgKOH/g, lequel polyol (A) est un mélange d'au moins
B) un polyol qui comporte au moins une structure dans laquelle un acide hydroxy-carboxylique comportant 15 atomes de carbone ou plus, obtenu à partir d'une huile végétale, est condensé avec un polyalcool, dont le nombre moyen de groupes fonctionnels vaut de 1,5 à 4,5 et dont l'indice d'hydroxyle vaut de 20 à 70 mgKOH/g,
C) et un polyol qui a été obtenu à partir d'une huile végétale, dont le nombre moyen de groupes fonctionnels vaut de 1,5 à 4,5 et dont l'indice d'hydroxyle vaut de 140 à 300 mgKOH/g,
étant entendu que la proportion du polyol (A) vaut de 25 à 100 %, en masse rapportée à une masse de 100 % pour le total des composants de type polyol.

12. Mousse de polyuréthane, produite par moussage d'une composition pour mousse de polyuréthane conforme à l'une des revendications 1 à 10.

13. Procédé de production d'une mousse de polyuréthane, qui comporte le fait de faire mousser une composition pour mousse de polyuréthane conforme à l'une des revendications 1 à 10.

14. Mousse de polyuréthane à faible rebond, produite par moussage d'une composition pour mousse de polyuréthane conforme à l'une des revendications 1 à 10.

15. Mousse de polyuréthane conforme à la revendication 14, pour laquelle le résultat numérique de la division de la dureté de la mousse à -20 °C par la dureté de la mousse à 23 °C est inférieur ou égal à 8.

16. Procédé de production d'une mousse de polyuréthane à faible rebond, qui comporte le fait de faire mousser une composition pour mousse de polyuréthane conforme à l'une des revendications 1 à 10.

17. Procédé de production d'une mousse de polyuréthane à faible rebond, conforme à la revendication 16, dans lequel on utilise un polyol qui comporte en moyenne au moins 3,1 chaînes latérales par molécule, lesquelles chaînes latérales comprennent chacune une chaîne hydrocarbonée comportant 4 atomes de carbone ou plus, dont le nombre moyen de groupes fonctionnels vaut de 1,5 à 4,5 et dont l'indice d'hydroxyle vaut de 80 à 140 mgKOH/g.

18. Polyol qui comporte en moyenne au moins 3,1 chaînes latérales par molécule, lesquelles chaînes latérales comprennent chacune une chaîne hydrocarbonée comportant 4 atomes de carbone ou plus, dont le nombre moyen de groupes fonctionnels vaut de 1,5 à 4,5 et dont l'indice d'hydroxyle vaut de 80 à 140 mgKOH/g, lequel polyol permet de produire une mousse de polyuréthane à faible rebond, pour laquelle le résultat numérique de la division de la dureté de la mousse à -20 °C par la dureté de la mousse à 23 °C est inférieur ou égal à 8.
